(19) Europäisches Patentamt / European Patent Office / Office européen des brevets

(11) **EP 3 694 288 B1**

(12) **EUROPEAN PATENT SPECIFICATION**

(45) Date of publication and mention
of the grant of the patent:
**24.08.2022 Bulletin 2022/34**

(21) Application number: **20166672.4**

(22) Date of filing: **24.02.2016**

(51) International Patent Classification (IPC):
*H04W 74/08* (2009.01)     *H04W 52/04* (2009.01)
*H04W 84/12* (2009.01)     *H04W 52/18* (2009.01)
*H04W 52/50* (2009.01)

(52) Cooperative Patent Classification (CPC):
**H04W 74/0816; H04W 52/18; H04W 74/0808;**
H04W 52/04; H04W 52/50; H04W 84/12

(54) **TERMINAL AND COMMUNICATION METHOD**

ENDGERÄT, BASISSTATIONSVORRICHTUNG, KOMMUNIKATIONSVERFAHREN UND
KOMMUNIKATIONSSYSTEM

APPAREIL DE TERMINAL, APPAREIL DE STATION DE BASE, PROCÉDÉ DE COMMUNICATION
ET SYSTÈME DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2015 JP 2015036028**

(43) Date of publication of application:
**12.08.2020 Bulletin 2020/33**

(62) Document number(s) of the earlier application(s) in
accordance with Art. 76 EPC:
**16755520.0 / 3 264 834**

(73) Proprietor: **Sharp Kabushiki Kaisha
Sakai-shi
Osaka 590-8522 (JP)**

(72) Inventors:
• **YOSHIMURA, Tomoki**
  **Sakai City, Osaka 590-8522 (JP)**
• **TOMEBA, Hiromichi**
  **Sakai City, Osaka 590-8522 (JP)**
• **ONODERA, Takashi**
  **Sakai City, Osaka 590-8522 (JP)**
• **HAMAGUCHI, Yasuhiro**
  **Sakai City, Osaka 590-8522 (JP)**

(74) Representative: **Müller-Boré & Partner
Patentanwälte PartG mbB
Friedenheimer Brücke 21
80639 München (DE)**

(56) References cited:
**WO-A1-2014/071308     US-A1- 2008 125 160
US-A1- 2016 353 480**

• **LAURENT CARIOU (ORANGE): "OBSS Reuse
mechanism which preserves fairness ;
11-14-1207-01-00ax-obss-reuse-mechanism-wh
ich-preserves-fairness", IEEE DRAFT;
11-14-1207-01-00AX-OBSS-REUSE-MECHANISM
-WH ICH-PRESERVES-FAIRNESS, IEEE-SA
MENTOR, PISCATAWAY, NJ USA, vol. 802.11ax,
no. 1, 15 September 2014 (2014-09-15), pages
1-18, XP068071031,**
• **Imad Jamil ET AL: "OBSS reuse mechanism
which preserves fairness", , 15 September 2014
(2014-09-15), XP055487015, Retrieved from the
Internet:
URL:https://mentor.ieee.org/802.11/dcn/14/
11-14-1207-01-00ax-obss-reuse-mechanism-wh
ich-preserves-fairness.ppt [retrieved on
2018-06-22]**

## Description

## Technical Field

The present invention relates to a terminal apparatus, and a communication method.

## Background Art

IEEE 802.11ac that results in realizing further speeding-up of IEEE 802.11, which is a standard for a wireless local area network (LAN), is established by the Institute of Electrical and Electronics Engineers Inc. (IEEE). At present, standardization activities for IEEE 802.11ax, which is a succeeding standard of IEEE 802.11ac, have been started. With the rapid spread of wireless LAN devices, in standardization of IEEE 802.11ax, a study has also been conducted on an improvement in throughput per user in an environment where the wireless LAN devices are arranged in an overcrowded manner.

A wireless LAN system is a system that makes a determination of whether or not transmission is possible based on carrier sense (CS). By using the carrier sense, if a reception interference level is lowered below a threshold, it is determined that the transmission is possible, and if an interference power that is higher than a threshold is received, the transmission is avoided.

In the standardization of 802.11ax, change of or dynamic control of a threshold of the carrier sense has been discussed. Under the environment where the wireless LAN devices are arranged in an overcrowded manner, it is expected that the opportunity for each device to perform transmission is increased by raising the threshold of the carrier sense. However, there is also a concern that by raising the threshold of the carrier sense, an interference level will be raised on the reception side.

In IEEE 802.11-14/0779r2 DSC Practical Usage, interference control is performed by dynamically changing a threshold for the carrier sense (a threshold of the carrier sense, a carrier sense level, or a clear channel assessment level (CCA level)). For example, an arrangement of terminal apparatuses, a distance between which is short, can increase the transmission opportunity by raising the CCA level. In a case where the CCA level is raised, it is also assumed that an amount of interference that occurs to another terminal apparatus increases, but it is possible that beamforming, Multi-User Multiple Input Multiple Output (MU-MIMO) Spatial Division Multiple Access (SDMA)) in a transmission terminal apparatus, or an interference suppression technology for a reception terminal apparatus is used to reduce an influence due to the interference.

In the standardization of IEEE 802.11ax, a function of enabling the CCA level to be variable has been discussed. Therefore, it is assumed that a terminal apparatus (ax terminal) that complies with IEEE 802.11ax uses a value that is different from a threshold in the related art. With the function described above, it is considered that the ax terminal performs satisfactory communication due to an interference suppression effect, but because a terminal (which is a terminal apparatus that complies with IEEE 802.11a/b/g/n/ac/ad and the like, and is hereinafter also called a legacy terminal) that complies with 802.11ax or earlier standards does not have the function of enabling the CCA level to be variable, there is a concern that the communication opportunity is greatly reduced due to an increase of the amount of interference.

Imad Jamil et al, "OBSS Reuse mechanism which preservers fairness", IEEE draft 802.11ax, doc: IEEE 802.11-14/1207r1, September 2014, proposes to establish a direct relationship between adaptation of CCA levels and transmission power used by a terminal, using a 3 step approach based on formulas linking CCA levels and transmission power.

WO 2014/071308 A1 describes methods and apparatuses for requesting clear channel assessment (CCA) measurements and adjusting CCA thresholds and transmission power based on the reported measurements.

US 2008/125160 describes a method of reducing interference in a wireless communication network, comprising adapting a transmission power of a signal of a wireless communication device when a clear channel assessment threshold equals a predetermined limit and a packet error rate exceeds a predetermined packet error rate threshold.

## Summary of Invention

An object of the present invention, which was made in view of the problems described above, is to provide a function of protecting communication by a legacy terminal while realizing satisfactory communication by an ax terminal enabling a CCA level to be variable, in an environment where the ax terminal and the legacy terminal are present together, in a communication system that needs carrier sense.

This object is solved by a terminal apparatus and a communication method as defined in the independent claims.

## Advantageous Effects of Invention

According to the present invention, there can be provided a terminal apparatus, and a communication method, which are excellent, because an apparatus that performs carrier sense using a high CCA level, and an apparatus that performs the carrier sense using a low CCA level can be suitably present together in a system that uses different CCA levels.

## Brief Description of Drawings

Fig. 1 is a diagram illustrating an example of a management range of a wireless communication system according to the present invention.

Fig. 2 is a diagram illustrating an example of an apparatus constitution of a base station apparatus according to the present invention.

Fig. 3 is a diagram illustrating an example of an apparatus constitution of a terminal apparatus according to the present invention.

Fig. 4 is a diagram illustrating an example of carrier sense operation of the terminal apparatus according to the present invention.

Fig. 5 is a diagram illustrating an example of a table showing a relationship between a CCA level value and a transmit power value according to the present invention.

Fig. 6 is a diagram illustrating an example of the management range of the wireless communication system not covered by the scope of claims.

Fig. 7 is a diagram illustrating an example of the apparatus constitution of the base station apparatus not covered by the scope of claims.

Fig. 8 is a diagram illustrating an example of the apparatus constitution of the terminal apparatus not covered by the scope of claims.

Fig. 9 is a diagram illustrating an example of the carrier sense operation of the terminal apparatus according to the present invention.

Fig. 10 is a diagram illustrating an example of a table showing a relationship between the CCA level value, $\gamma$, and the transmit power value according to the present invention.

**Description of Embodiments**

A communication system according to the present embodiment includes a wireless transmission apparatus (an access point, a base station apparatus: access point, and a base station apparatus), and a plurality of wireless reception apparatuses (stations, terminal apparatuses:
stations, and terminal apparatuses). Furthermore, a network that the base station apparatus and the terminal apparatus constitute is referred to as a base service set (BSS) (a management range). Furthermore, the base station apparatus and the terminal apparatus are collectively also called a wireless apparatus.

Each of the base station apparatus and the terminal apparatus within the BSS is assumed to perform communication based on carrier sense multiple access with collision avoidance (CSMA/CA). An infrastructure mode in which the base station apparatus and the plurality of terminal apparatuses perform communication is intended for the present embodiment, but it is also possible that a method according to the present embodiment is implemented in an ad hoc mode in which the terminal apparatuses directly perform communication with each other. In the ad hoc mode, the terminal apparatus configures the BSS instead of the base station apparatus. The BSS in the ad hoc mode is also called an independent basic service set (IBSS). The terminal apparatus that configures the IBSS in the ad hoc mode is hereinafter assumed to be regarded as the base station apparatus.

In a system in compliance with IEEE 802.11 it is possible that each apparatus transmits a plurality of frame types of transmission frames which have a common frame format. The transmission frame is defined in each of a physical (PHY) layer, a medium access control (MAC) layer, and a logical link control (LLC) layer.

The transmission frame in the PHY layer is referred to as a PHY protocol data unit (PPDU) (a physical layer frame). A physical layer header (PHY header) in which header information or the like for performing signal processing in the physical layer is included, a PHY service data unit (PSDU) (a MAC layer frame), or the like that is a data unit which is processed in the physical layer constitute the PPDU. It is possible that the PSDU is constituted from an aggregated MPDU (A-MPDU) that results from a plurality of MAC protocol data units (MPDUs), each of which is a unit of retransmission in a wireless section, being aggregated.

In the PHY header, a reference signal in a short training field (STF) that is used for signal detection and synchronization and the like, a long training field (LTF) that is used for acquiring channel information for data demodulation, and the like, and a control signal, such as a signal (SIG) in which control information for data demodulation is included, are included. Furthermore, according to a corresponding standard, the STFs are categorized into a legacy-STF (L-STF), a high throughput-STF (HT-STF), a very high throughput-STF (VHT-STF), and the like, and the LTFs or the SIGs are categorized in the same manner into an L-LTF, an HT-LTF, or a VHT-LTF, and an L-SIG, a HT-SIG, and a VHT-SIG. The VHT-SIGs are further categorized into a VHT-SIG-A and a VHT-SIG-B.

Moreover, the PHY header can include information (hereinafter also called BBS identification information) for identifying the BSS that is a transmission source of the transmission frame. The information for identifying the BSS, for example, can be a service set identifier (SSID) of the BSS, and a MAC address of the base station apparatus within the BSS. Furthermore, in addition to the SSID or the MAC address, the information for identifying the BSS can be a (for example, a BBS color or the like) a value specific to the BSS.

The PPDU is modulated in compliance with a corresponding standard. For example, if the PPDU complies with IEEE 802.11n standard, the PPDU is modulated into an orthogonal frequency division multiplexing signal (OFDM).

The MPDU is constituted from a MAC layer header (MAC header) in which header information for performing signal processing in a MAC layer is included, a MAC server data unit (MSDU) that is a data unit which is processed in the MAC layer, or a frame body, and a frame check portion (a frame check sequence (FCS)) for checking whether or not an error is present in a frame. Furthermore, it is also possible that a plurality of MDSUs are aggregated as an aggregated MSDU (A-MSDU).

Frame types of transmission frames in the MAC layer are mainly categorized into three frames: a management frame for managing a state of a connection between apparatuses; a control frame for managing a state of communication between apparatuses; and a data frame that includes actual transmission data, and each of the three frames are divided into a plurality of types of subframes. Included in the control frame are an acknowledgement (Ack) frame, a request-to-send (RTS) frame, a clear-to-send (CTS) frame and the like. Included in the management frame are a beacon frame, a probe request frame, a probe response frame, an authentication frame, a connection request (association request) frame, a connection response (association response) frame, and the like. Included in the data frame are a data frame, a polling (CF-poll) frame, and the like. Each apparatus reads contents in a frame control frame that are included in the MAC header, and thus can determine a frame type of the received frame, and a subframe type.

It is noted that a block Ack may be included in the Ack. It is possible that the block Ack provides the acknowledgement to a plurality of MPDUs.

A periodicity (a beacon interval) at which a beacon is transmitted, and a field in which the SSID is recorded are included in the beacon frame. It is possible that the base station apparatus broadcasts the beacon frame to the entire BSS with a periodicity. It is possible that the terminal apparatus determines a base station apparatus in the vicinity of the terminal apparatus by receiving the beacon frame. Scanning by which the terminal apparatus determines the base station apparatus based on the beacon frame that is broadcast by the base station apparatus is referred to as Passive scanning. On the other hand, scanning by which the terminal apparatus searches for the base station apparatus by broadcasting a probe request frame to the entire BSS is referred to as Active scanning. It is possible that as a response to the probe request frame, the base station apparatus transmits a probe response frame, and contents that are recorded in the probe response frame are the same as those in the beacon frame.

The terminal apparatus recognizes the base station apparatus and then performs a process of connection establishment on the base station apparatus. The process of connection establishment is categorized into an authentication procedure and a connection (association) procedure. The terminal apparatus transmits an authentication frame (an authentication request) to the base station apparatus to which the terminal apparatus wants to make a connection. When receiving the authentication frame, the base station apparatus transmits an authentication frame (an authentication response) that includes a status code indicating whether or not the authentication of the terminal apparatus is approved, and the like, to the terminal apparatus. The terminal apparatus reads the status code that is recorded in the authentication frame, and thus can determine whether or not the authentication of the terminal apparatus is approved by the base station apparatus. Noted that it is possible that the base station apparatus and the terminal apparatus exchanges the authentication frame a plurality of times.

Subsequently to the authentication procedure, the terminal apparatus transmits a connection request frame in order to execute a procedure for connection to the base station apparatus. When receiving the connection request frame, the base station apparatus determines whether or not the connection by the terminal apparatus is approved, and transmits a connection response frame in order to provide a notification of that effect. In addition to the status code indicating whether or not the process of connection establishment is performed, an association identifier (AID) for identifying the terminal apparatus is recorded in the connection response frame. The base station apparatus configures different AIDs for terminal apparatuses to which a connection approval is provided, and thus it is possible that the base station apparatus manages a plurality of terminal apparatuses.

After the process of connection establishment is performed, the base station apparatus and the terminal apparatus perform actual data transmission. In the system in compliance with IEEE 802.11, a distributed coordination function (DCF), and a point coordination function (PCF), and a function (enhanced distributed channel access (EDCA)) that results from enhancing these functions, a hybrid coordination function (HCF), or the like are defined. An example of a case where with the DCF, the base station apparatus transmits a signal to the terminal apparatus will be described.

With the DCF, in advance of communication, the base station apparatus and the terminal apparatus performs carrier sense (CS) for checking a usage situation of a wireless channel in the vicinity of the base station apparatus and the terminal apparatus respectively. For example, in a case where a signal whose level is higher than a predetermined clear channel assessment level (CCA level) is received on the wireless channel, the base station apparatus that is a transmission station delays transmission of the transmission frame on the wireless channel. A state in which a signal that has the CCA level or higher is detected and a state in which a signal that has the CCA level or higher is not detected are hereinafter referred to as a busy mode and an idle mode, respectively. In this manner, the CS that is performed based on a power (a received power level) of a signal that is actually received by each apparatus is referred to as a physical carrier sense (physical CS). It is noted that the CCA level is also referred to as a carrier sense level (CS level) or a CCA threshold (CCAT). It is noted that in a case where a signal that has the CCA level or higher is detected, the base station apparatus and the terminal apparatus starts to perform an operation of demodulating at least a signal in the PHY layer.

The base station apparatus performs the carrier sense on the transmission frame to be transmitted, for an interframe space (IFS) in accordance with a type, and determines whether the wireless channel is the busy mode or the idle mode. A duration for which the base station apparatus performs the carrier sense varies with a frame type of transmission frame and a subframe that is thereafter transmitted by the base station apparatus. In the system in compliance with IEEE 802.11, a plurality of IFSs having different periods is defined, including a short IFS (SIFS) that is used for the transmission frame to which the highest priority is given, a polling space (PCF IFS (PIFS)) that is used for the transmission frame which has a comparatively high priority, and a distributed control frame space (DCF IFS (DIFS)) that is used for the transmission frame which has the lowest priority, and the like. In a case where with the DCF, the base station apparatus transmits a data frame, the base station apparatus uses the DIFS.

The base station apparatus waits for the DIFS, and then further waists for random backoff time in order to prevent frame collision. In the system in compliance with IEEE 802.11, the random backoff time that is referred to as a contention window (CW) is used. In the CSMA/CA, it is assumed that a transmission frame that is transmitted by a certain transmission station is received in a reception station in a state where there is no interference from other transmission stations. For this reason, when transmission stations transmit transmission frames at the same timing, collision occurs among the frames and the reception stations cannot receive the frames correctly. Accordingly, before each transmission station starts to perform transmission, each transmission waits for time randomly set, and thus collision among frames is avoided. When with the carrier sense the base station apparatus determines that the wireless channel is in the idle mode, the base station apparatus starts to count down the CW. When the CW counts down to zero, the base station apparatus can acquire a transmission right for the first time and can transmit the transmission frame to the terminal apparatus. It is noted that in a case where, while the countdown of the CW is in progress, with the carrier sense, the base station apparatus determines that the wireless channel is in the busy mode, the base station stops counting down the CW. Then, in a case where the wireless channel is in the idle mode, subsequently to the preceding IFS, the base station apparatus resumes counting down the remaining CW.

The terminal apparatus that is the reception station receives a transmission frame, reads the PHY header of the transmission frame, and demodulates the received transmission frame. Then, the terminal apparatus reads the MAC header of the demodulated signal, and thus can recognize whether or not the transmission frame is destined for the terminal apparatus. Noted that it is also possible that the terminal apparatus determines a destination of the transmission frame based on information (for example, a group identifier information (GID) that is recorded in VHT-SIG-A) that is recorded in the PHY header.

In a case where the terminal apparatus determines that received transmission frame is destined for the terminal apparatus, and the transmission frame can be demodulated without an error, the terminal apparatus has to transmit an ACK frame indicating that the frame can be correctly received, to the base station apparatus. The ACK frame is one of the transmission frames that have the highest priority, which are transmitted with the waiting time (from which the random backoff time is excluded) for an SIFS duration. The base station apparatus receives the ACK frame that is transmitted from the terminal apparatus, and thus ends a communication sequence. It is noted that in a case where the terminal apparatus does not receive the frame correctly, the terminal apparatus does not transmit the ACK. Therefore, in a case where the ACK frame is not received from the reception station for a fixed duration (an SIFS + an ACK frame length) after the frame transmission, the base station apparatus sets this as a failure in communication and ends the communication. In this manner, the one-time ending of the communication (also referred to as a burst) in the system in compliance with IEEE 802.11 is necessarily determined depending on the presence and absence of the reception of the ACK frame, except for special cases, such as a case where a broadcast signal such as the beacon frame is transmitted, and a case where fragmentation that divides the transmission data into small pieces of data is used.

In a case where the terminal apparatus determines that the received transmission frame is not destined for the terminal apparatus, the terminal apparatus sets a network allocation vector (NAV) based on a length of the transmission frame, which is recorded in the PHY header or the like. The terminal apparatus does not make an attempt to perform communication for a duration that is set for the NAV. More precisely, because for a duration that is set for the NAV, the terminal apparatus makes an attempt to perform the same operation as in a case where it is determined with the physical CS that the wireless channel is in the busy mode, communication control by the NAV is also referred to as virtual carrier sense (virtual CS). Not only is the NAV set based on the information that is recorded in the PHY header, but is also set by the request-to-send (RTS) frame or the clear-to-send (CTS) frame that is introduced to cope with a hidden terminal.

Whereas in the DCF, each apparatus performs the carrier sense and autonomously acquires the transmission right, in the PCF, a control station that is referred to as a point coordinator (PC) controls the transmission right of each apparatus within the BSS. Generally, the base station apparatus is the PC, and acquires the transmission right of the terminal apparatus within the BSS.

A communication period by the PCF includes a contention free period (CFP) and a contention period (CP). The communication is performed for the CPs based on the DCF described above, and the PC controls the transmission right for the CFPs. The base station apparatus that is the PC broadcasts the beacon frame in which a CFP max duration and the like are recorded, prior to the communication by the PCF. It is noted that the PIFS is used for the transmission of the beacon frame which is broadcast when the PCF starts to be transmitted, and the beacon frame is transmitted without waiting for the CW. The terminal apparatus that receives the beacon frame sets the CFP max duration that is recorded in the beacon frame, for the NAV. Hereinafter, until the NAV elapses, or until a signal (for example, a data frame that includes CF-end) that broadcasts the ending of the CFP in the BSS, it is possible that the terminal apparatus acquires the transmission right only in a case where a signal (for example, a data frame that includes CF-poll) that signals the acquisition of the transmission right transmitted by the PC, is received. It is noted that for the CFP max duration, because collision does not occur among packets within the same BSS, each terminal apparatus does not take the random backoff time that is used for the DCF.

The wireless apparatuses are categorized into a new function-equipped terminal apparatus and a legacy terminal apparatus. The new function-equipped terminal apparatus is a terminal apparatus that can change a CCA level. The legacy terminal apparatus is a wireless apparatus that cannot change the CCA level.

Some of the wireless apparatuses perform the carrier sense using only the CCA level that is a predetermined value. The CCA level that is a predetermined value is hereinafter also called as a predetermined value of the CCA level or a predetermined value of a threshold of the carrier sense. The legacy terminal apparatuses include a wireless apparatus that performs the carrier sense using only the predetermined value of the CCA level. On the other hand, the new function-equipped terminal apparatuses include a wireless apparatus that is equipped with a function of performing the carrier sense using a value other than the predetermined value of the CCA level.

It is noted that the legacy terminals include a wireless apparatus which performs the communication using the predetermined value even though the wireless apparatus includes a function of performing the carrier sense using a value other than the predetermined value of the CCA level. More precisely, for example, in a case where the new function-equipped terminal apparatus uses the predetermined value of the threshold of the carrier sense, the new function-equipped terminal apparatus can be the legacy terminal apparatus. For example, the new function-equipped terminal apparatus and the legacy terminal apparatus can be communication apparatuses that use the same communication scheme. Furthermore, the new function-equipped terminal apparatus and the legacy terminal apparatus can use different communication schemes.

It is noted that for example, the predetermined value of the CCA level can be a value that is specified, for example, in IEEE 802.11 standard. For example, in a case where the wireless apparatus performs OFDM transmission using a frequency band of 20 MHz, the predetermined values of the CCA level are CCA-SD = -82 dBm, and CCA-ED = -62 dBm. It is noted that the predetermined value of the CCA level can be a value that is determined in accordance with a communication scheme, a frequency band that is used, the number of antennas (an antenna element) that are used, a modulation scheme, a type of wireless apparatus, legal regulations, or the like.

It is noted that transmit power can be hereinafter a transmit power maximum value. In some cases, the terminal apparatus or the base station apparatus changes the transmit power according to information, such as a path loss or a link margin.

[1. First Embodiment]

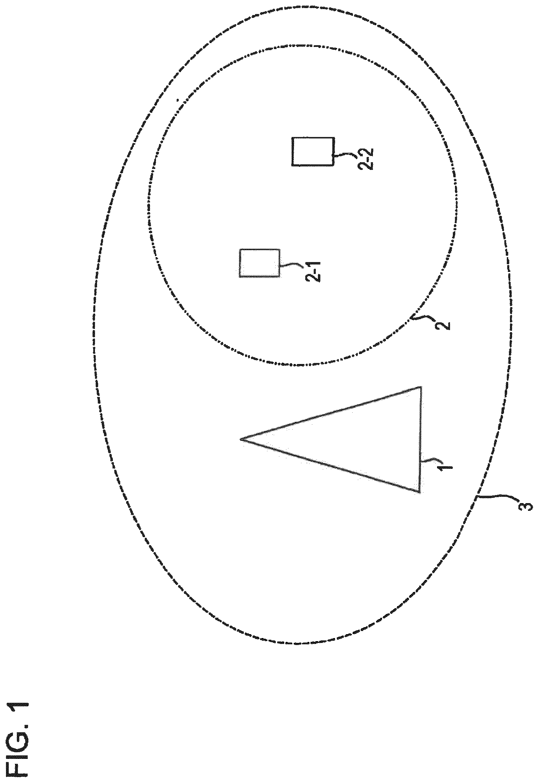

Fig. 1 is a diagram illustrating an example of a management range 3 of a wireless communication system according to the present embodiment. A base station apparatus 1 and terminal apparatuses 2-1 to 2-2 are in the management range 3. The terminal apparatuses 2-1 to 2-2 are also called a terminal apparatus 2. Although in an example that is illustrated in Fig. 1 two terminal apparatuses 2-1 and 2-2 are in the management range 3, it is possible that a method according to the present embodiment is implemented when two or more terminal apparatuses 2 are in the management range 3.

Before transmitting the transmission frame to a wireless section, the base station apparatus 1 and the terminal apparatus 2 make a determination of whether the transmission sense is possible by the carrier. The base station apparatus 1 and the terminal apparatus 2 include information relating to the CCA level, which is a threshold of the carrier sense. The information relating to the CCA level can be used to set CCA levels of the base station apparatus 1 and the terminal apparatus 2.

The terminal apparatus 2 can set different CCA levels. For example, the terminal apparatus 2-1 and the terminal apparatus 2-2 can set CL2-1 and CL2-2 as CCA levels, respectively. It is noted that in the following description it is assumed that CL2-1 ≥ CL2-2. It is noted that the terminal apparatus 2 can also set the CCA levels CL2-1 and CL2-2 dynamically. For example, the terminal apparatus 2 can change the CCA levels CL2-1 and the CL2-2 according to the time, a frequency, a destination of the transmission frame, and a type of transmission frame.

The base station apparatus 1 can set a CCA level CL1. The base station apparatus 1 can set the CCA level CL1 dynamically. For example, the base station apparatus 1 can change the CCA level CL1 according to the time, a frequency, a destination of the transmission frame, and a type of transmission frame.

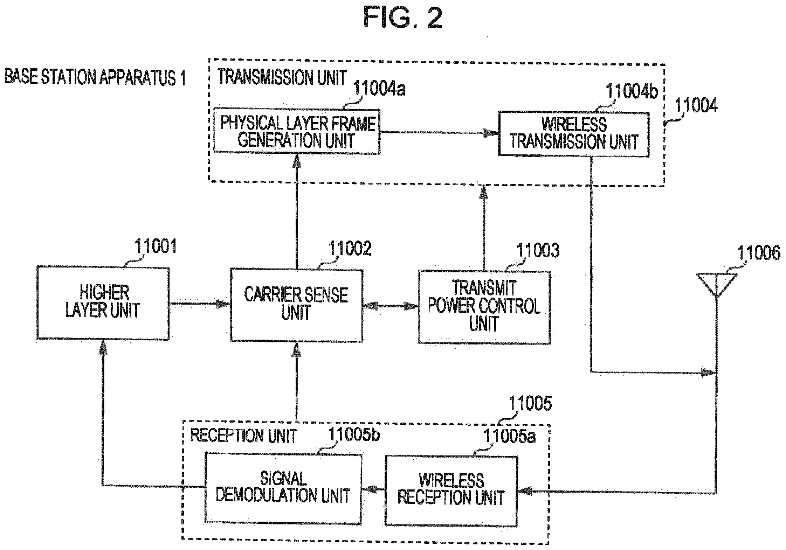

Fig. 2 is a diagram illustrating an example of an apparatus constitution of the base station apparatus 1. The base station apparatus 1 is constituted to include a higher layer unit 11001, a carrier sense unit 11002, a transmit power control unit 11003, a transmission unit 11004, a reception unit 11005, and an antenna unit 11006.

The higher layer unit 11001 is connected to another network and has a function of sending information associated with the transmission frame to the carrier sense unit 11002. The transmission frame will be described below as being defined in the MAC layer, but the transmission frame according to the present embodiment can also be defined by a layer other than the MAC layer. For example, the transmission frame can be defined by an LLC layer and the physical layer.

The carrier sense unit 11002 has a function of making a determination of whether the transmission is possible based on the carrier sense. The carrier sense unit 11002 notifies the transmit power control unit 21003 of the information relating to the CCA level using the carrier sense. The information relating to the CCA level, for example, may be a CCA level value that is used by the carrier sense unit 11002 for the carrier sense, and may be a difference (a CCA offset or a CCA offset) between a CCA level value that is used by the carrier sense unit 11002 for the carrier sense and a CCA level (a legacy CCA level or a CCA level in compliance with current IEEE standards) of the legacy terminal apparatus. Furthermore, the information relating to the CCA level, for example, may be information relating to whether or not the carrier sense unit 11002 uses the CCA level of the legacy terminal apparatus. The carrier sense unit 11002 can notify the transmit power control unit 11003 of information for identifying a transmission source of the transmission frame that is received by the antenna unit 11006.

The transmit power control unit 11003 performs transmit power control based on the information relating to the CCA level. The transmit power control unit 11003 can notify the carrier sense unit 11002 and the transmission unit 11004 of information relating to the transmit power.

The transmission unit 11004 includes a physical layer frame generation unit 11004a and a wireless transmission unit 11004b.

The physical layer frame generation unit 11004a has a function of generating a physical layer frame from the transmission frame that is notified by the carrier sense unit 11002. The physical layer frame generation unit 11004a performs error correction coding, modulation, precoding filter multiplication, and the like on the transmission frame. The physical layer frame generation unit 11004a notifies the wireless transmission unit 11004b of the generated physical layer frame.

The wireless transmission unit 11004b converts the physical layer frame that is generated by the physical layer frame generation unit 11004a into a signal in a radio frequency (RF), and generates a radio frequency signal. The processing that is performed by the wireless transmission unit 11004b includes digital-to-analog conversion, filtering, frequency conversion from a baseband to an RF band, and the like.

The reception unit 11005 includes a wireless reception unit 11005a and a signal demodulation unit 11005b. The reception unit 11005 has a function of calculating the received power level from the signal in the RF band that is received by the antenna unit 11006, but a method of calculating the received power level is not limited. The reception unit 11005 notifies the carrier sense unit 11002 of information relating to the calculated received power level. The carrier sense unit 11002 can determine whether or not the transmission is possible, based on the information relating to the received power level, which is notified by the reception unit 11005. The reception unit 11005 can notify the carrier sense unit 11002 of the information for identifying the transmission source of the transmission frame that is received by the antenna unit 11006.

The wireless reception unit 11005a has a function of converting the signal in the RF band, which is received by the antenna unit 11006, into a baseband signal and generating physical layer signal (for example, the physical layer frame). The processing that is performed by the wireless reception unit 11005a includes the processing for frequency conversion from the RF band to the baseband, the filtering, and the analog-to-digital conversion.

The signal demodulation unit 11005b has a function of demodulating the physical layer signal that is generated by the wireless reception unit 11005a. The processing that is performed by the signal processing unit 11005b includes channel equalization, demapping, error correction decoding, and the like. The signal processing unit 11005b can extract information that the physical layer header has, information that the MAC header has, and information that the transmission frame has, from the physical layer signal. The signal demodulation unit 11005b can notify the higher layer unit 11001 of the extracted information. It is noted that although the signal demodulation unit 11005b may extract any of or a plurality of the information that the physical layer header has, the information that the MAC header has, and the information that the transmission frame has.

The antenna unit 11006 has a function of transmitting the radio frequency signal that is generated by the wireless transmission unit 11004b into a radio space toward the terminal apparatus 2. Furthermore, the antenna unit 11006 has a function of receiving the radio frequency signal that is transmitted from the terminal apparatus 2. Furthermore, the antenna unit 11006 has a function of receiving the signal on the channel that is present in the radio space in a case where the base station apparatus 1 performs the carrier sense.

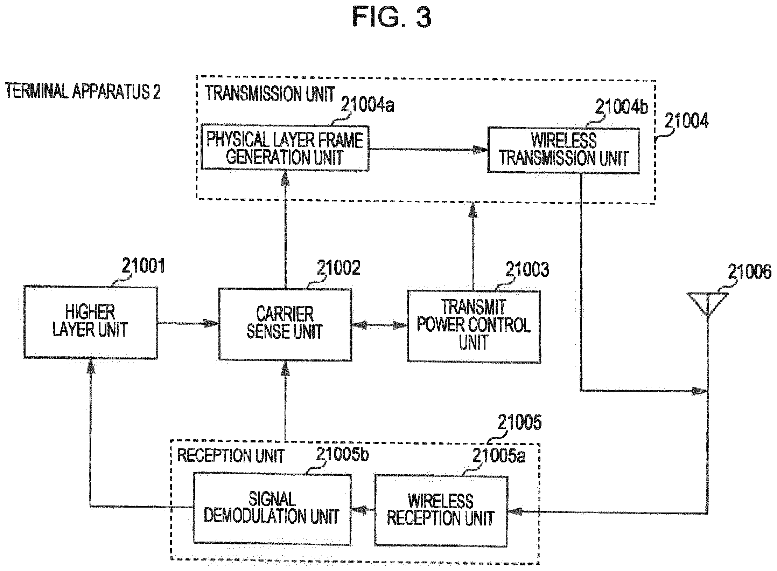

Fig. 3 is a diagram illustrating an example of an apparatus constitution of the terminal apparatus 2. The terminal apparatus 2 is constituted to include a higher layer unit 21001, a carrier sense unit 21002, a transmit power control unit 21003, a transmission unit 21004, a reception unit 21005, and an antenna unit 21006.

The higher layer unit 21001 is connected to another network and has a function of notifying the information associated with the transmission frame to the carrier sense unit 21002.

The carrier sense unit 21002 has a function of making a determination of whether the transmission is possible based on the carrier sense. The carrier sense unit 21001 can notify the transmit power control unit 21003 of the information relating to the CCA level. The carrier sense unit 21002 can notify the transmit power control unit 21003 of the information for identifying the transmission source of the transmission frame that is received by the antenna unit 21006.

The transmit power control unit 21003 performs the transmit power control based on the information relating to the CCA level. The transmit power control unit 21003 can notify the carrier sense unit 21002 and the transmission unit 21004 of the information relating to the transmit power.

The transmission unit 21004 includes a physical layer frame generation unit 21004a and a wireless transmission unit 21004b.

The physical layer frame generation unit 21004a has a function of generating the physical layer frame from the transmission frame that is notified by the carrier sense unit 21002. The physical layer frame generation unit 21004a performs the error correction coding, the modulation, the precoding filter multiplication, and the like on the transmission frame. The physical layer frame generation unit 21004a notifies the wireless transmission unit 21004b of the generated physical layer frame.

The wireless transmission unit 21004b converts the physical layer frame that is generated by the physical layer frame generation unit 21004a into a signal in the radio frequency (RF), and generates a radio frequency signal. The processing that is performed by the wireless transmission unit 21004b includes the digital-to-analog conversion, the filtering, the frequency conversion from the baseband to the RF band, and the like.

The reception unit 21005 includes a signal demodulation unit 21005a and a wireless reception unit 21005b. The reception unit 21005 has a function of calculating a received power level from the signal in the RF band that is received by the antenna unit 21006, but a method of calculating the received power level is not limited. The reception unit 21005 notifies the carrier sense unit 21002 of the information relating to the calculated received power level. The carrier sense unit 21002 can determine whether or not the transmission is possible, based on the information relating to the received power level, which is notified by the reception unit 21005. The reception unit 21005 can notify the carrier sense unit 21002 of the information for identifying the transmission source of the transmission frame that is received by the antenna unit 21006.

The wireless reception unit 21005a has a function of converting the signal in the RF band, which is received by the antenna unit 21006, into the baseband signal and generating the physical layer signal (for example, the physical layer frame, or the like). The processing that is performed by the wireless reception unit 21005a includes the processing for the frequency conversion from the RF band to the baseband, the filtering, and the analog-to-digital conversion.

The signal demodulation unit 21005b has a function of demodulating the physical layer signal that is generated by the wireless reception unit 21005a. The processing that is performed by the signal demodulation unit 21005b includes the channel equalization, the demapping, the error correction decoding, and the like. The signal demodulation unit 21005b can extract the information that the physical layer header has, the information that the MAC header has, and the information that the transmission frame has, from the physical layer signal. The signal demodulation. unit 21005b can notify the higher layer unit 21001 of the extracted information. It is noted that although the signal demodulation unit 21004b extracts any of the information that the physical layer header has, the information that the MAC header has, and the information that the transmission frame has, or a plurality of pieces of information, this does not impose any problem.

The signal demodulation unit 21005b has a function of demodulating a transmit signal of the base station apparatus 1.

The antenna unit 21006 has a function of transmitting the radio frequency signal that is generated by the wireless transmission unit 21004b into the radio space toward the base station apparatus terminal apparatus 1. Furthermore, the antenna unit 21006 has a function of receiving the radio frequency signal that is transmitted from the base station apparatus 1. Furthermore, the antenna unit 21006 has a function of receiving the signal on the channel that is present in the radio space in a case where the terminal apparatus 2 performs the carrier sense.

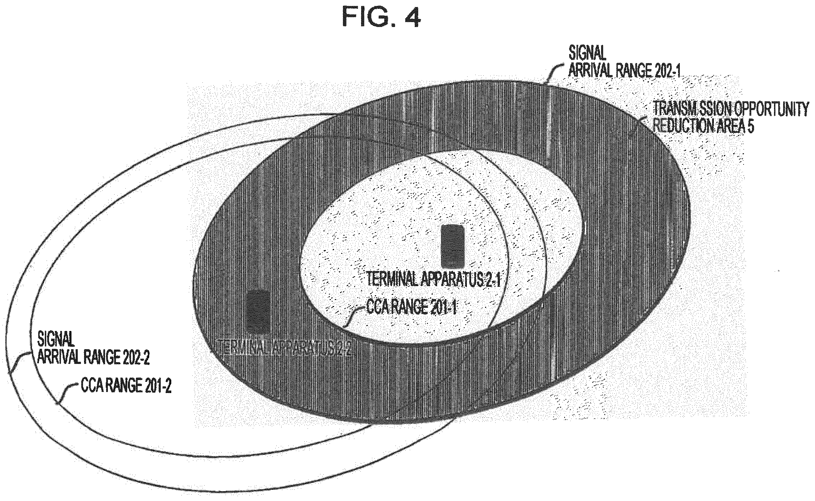

The transmit power control unit 11003 is the same operation as the transmit power control unit 21003. Fig. 4 is a diagram illustrating an example of a carrier sense operation by the terminal apparatus 2. The terminal apparatus 2-1 forms a CCA range 201-1 and a signal arrival range 202-1. The CCA range 201-1 indicates a range in which the terminal apparatus 2-1 performs transmission standby using the carrier sense. In other words, in a case where other wireless apparatuses that are present in the CCA range 201-1 transmit a signal, this can mean that a received power of the signal which is observed by the terminal apparatus 2-1 exceeds a CCA level CL2-1 of the terminal apparatus 2-1. The CCA range 201-1 changes with the CCA level of the terminal apparatus 2-1 and transmit powers of other wireless apparatuses, but the transmit powers of other wireless apparatuses are described below as not changing.

The CCA range 201-1 can be a narrow range by the terminal apparatus 2-1 configuring the CCA level CL2-1 to be a high level. The CCA range 201-1 can be a wide range by the terminal apparatus 2-1 configuring the CCA level CL2-1 to be a low level. The signal arrival range 202-1 indicates a range in which a signal which is transmitted by the terminal apparatus 2-1 arrives. In other words, this means that a received power in a case where the signal that is transmitted by the terminal apparatus 2-1 is received by another wireless apparatus that is present in the signal arrival range 202-1 exceeds a CCA level of the wireless apparatus. The signal arrival range 202-1 can be a wide range by the terminal apparatus 2-1 configuring the transmit power P2-1 to be at a high value. The signal arrival range 202-1 can be a narrow range by the terminal apparatus 2-1 configuring the transmit power P2-1 to be at a low value. Furthermore, the terminal apparatus 2-2 forms a CCA range 201-2 and a signal arrival range 202-2. The CCA range 201-2 indicates a range in which the terminal apparatus 2-2 performs the transmission standby using the carrier sense. The signal arrival range 202-2 indicates a range in which a signal which is transmitted by the terminal apparatus 2-2 arrives. A reference, based on which the terminal apparatus 2-1 determines the transmission standby using the carrier sense, can be interpreted as a case where the terminal apparatus (for example, the terminal apparatus 2-2) that is positioned within an area in the CCA range 201-1 transmits a signal and where the terminal apparatus 2-1 is positioned within an area in a signal arrival range (for example, the signal arrival range 202-2) for the terminal apparatus.

It is noted that the CCA level of the terminal apparatus 2 is assumed to be CL2-1 $\geq$ CL2-2 and that the CCA range 201-1 is narrower than or equal to CCA 201-2.

In a case where the terminal apparatus 2-2 is positioned outside of the CCA range 201-1 and where the terminal apparatus 2-2 transmits a signal, the terminal apparatus 2-1 can transmit a signal. In a case where the terminal apparatus 2-1 is positioned within the CCA range 201-2 and where the terminal apparatus 2-1 transmits a signal, the terminal apparatus 2-2 cannot transmit a signal. In this manner, the transmission opportunity for the terminal apparatus 2-2 that is positioned outside of the CCA range 201-1 and is positioned within the signal arrival range 202-1 is reduced. It is noted that an area that is positioned outside of the CCA range 201-1 and is positioned within the signal arrival range 202-1 is defined as a transmission opportunity reduction area 5. If the CL2-1 is set to be at a high value, because the CCA range 201-1 is further narrowed, the transmission opportunity reduction area 5 is enlarged. It is noted that the enlarging of the transmission opportunity reduction area 5 can be interpreted as the configuring of the CCA level to be at a high value reducing a transmission opportunity requirement ratio for the terminal apparatus 2-2 in comparison with an acquisition rate of the transmission opportunity for the terminal apparatus 2-1.

The present invention is made in view of the transmission opportunity reduction area 5 being enlarged. In order to reduce the transmission opportunity reduction area 5, the terminal apparatus 2-1 performs the transmit power control.

A first method according to the present embodiment is a method in a case where the terminal apparatus 2-2 does not change the CCA level. The terminal apparatus 2-2 may be the legacy terminal apparatus, and may be the new function-equipped terminal apparatus. The carrier sense unit 21002 notifies the transmit power control unit 21003 of information relating to whether or not the CCA level is changed, as the information relating to the CCA level. Based on the information relating to whether or not the CCA level is changed, the transmit power control unit 21003 performs the transmit power control. For example, in a case where the carrier sense unit 21002 performs the CCA level changing, by $\alpha$ using a transmit power reduction ratio $\alpha$, the transmit power control unit 21003 can multiply the transmit power. On the other hand, in a case where the carrier sense unit 21002 does not perform the CCA level changing, the transmit power control unit 21003 can make a determination not to perform the transmit power.

Furthermore, in the first method according to the present embodiment, the carrier sense unit 21002 can notify the transmit power control unit 21003 of the CCA level value or a CCA offset value, as the information relating to the CCA level. In this case, based on the CCA level value or the CCA offset value, the transmit power control unit 21003 generates the information relating to whether or not the CCA level is changed.

For example, in the first method according to the present embodiment, in a case where the terminal apparatus 2-1 raises the CCA level, the transmit power can be saved, and the transmission opportunity reduction area 5 can be reduced.

A second method according to the present embodiment is a method in which the transmission is performed based on the CCA level and a rule (or an equation) relating to the transmit power. The carrier sense unit 21002 notifies the transmit power control unit 21003 of the CCA level value or the CCA offset value, as the information relating to the CCA level. For example, the transmit power control unit 21003 can determine a transmit power P based on Equation (1).

$$P = P0 \times \beta/\text{Coff} \qquad (1)$$

where P0 is a transmit power value that is a reference, Coff is a CCA offset value, and β is a constant of proportionality. It is noted that Equation (1) is an example of the second method. Generally, the transmit power P is a reduction function of Coff, and thus the transmission opportunity reduction area 5 can be reduced. For example, in a case where β = 1, because a transmit power value can be lowered as much as the CCA offset value, the transmission opportunity reduction area 5 can be suitably reduced.

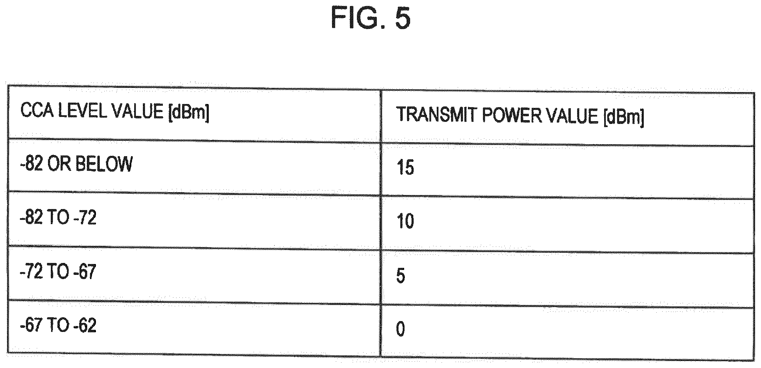

A third method according to the present embodiment is a method in which the transmit power control unit 21003 refers to a table showing a relationship between the CCA level value or the CCA offset value, and the transmit power value. Fig. 5 is a diagram illustrating an example of a table showing a relationship between the CCA level value and the transmit power value. The transmit power control unit 21003 can acquire the transmit power value that corresponds to the acquired CCA level value, from the table that is illustrated in Fig. 5.

It is noted that in the first to third methods according to the present embodiment, the CCA level value, the CCA offset value, and the transmit power value can also be set to be in decibel notation and can also be set to be in a true value expression. Furthermore, a differential value of the transmit power value can be set in a field for the transmit power value.

It is noted that the transmit power control unit 21003 suitably sets any one of the transmit power reduction ratio α, Equation (1), and the table showing the relationship between the CCA level value and the transmit power value to be at least already known. For example, each of the base station apparatus 1 and the terminal apparatus 2 can hold information relating to any one of the transmit power reduction ratio α, Equation (1), and the table showing the relationship between the CCA level value and the transmit power value, in a storage area (a memory, a storage, a register, a hard disk, or the like) that is retained in each of the base station apparatus 1 and the terminal apparatus 2 themselves. Furthermore, the base station apparatus 1 can notify the terminal apparatus 2 of the information relating to any one of the transmit power reduction ratio α, Equation (1), and the table showing the relationship between the CCA level value and the transmit power value, in state of being inserted in a management frame, such as a beacon, a probe response, or an association response, a physical header within the transmission frame, or the MAC header.

It is noted that the terminal apparatus 2-1 is the new function-equipped terminal apparatus, but in some cases the transmit power control may be difficult to perform. In this case, the terminal apparatus 2-1 cannot perform the first to third methods according to the present invention. In a case where the terminal apparatus 2-1 cannot perform the transmit power control, an operation of changing the CCA level is prohibited and thus, it is possible that the enlarging of the transmission opportunity reduction area 5 is suppressed. Furthermore, the terminal apparatus 2-1 can lower the CCA level value in a manner that is lower than a predetermined value, and in this case, the terminal apparatus can raise the transmit power.

Furthermore, the terminal apparatus 2-1 can determine whether or not the first to third methods according to the present invention are implemented, according to a frequency band in which a frame is transmitted. For example, without implementing the methods according to the present invention in a frequency band of 2.4 GHz, a terminal apparatus 2-4 can implement the methods according to the present invention in a frequency band of 5 GHz.

Furthermore, in a case where the terminal apparatus 2-1 cannot perform the transmit power control, the terminal apparatus 2-1 can report to the base station apparatus 1 that the operation of changing the CCA level is prohibited.

For example, the base station apparatus 1 receives the report that the operation of changing the CCA level is prohibited, from the terminal apparatus 2-1, and can transmit information indicating that the terminal apparatus 2 has to perform or stop the operation of changing the CCA level, to the terminal apparatus 2 that is connected to the base station apparatus 1.

It is noted that in other than the case where the report that the operation of changing the CCA level is prohibited is received from the terminal apparatus 2-1, the base station apparatus 1 can also transmit the information indicating that the terminal apparatus 2 has to perform or stop the operation of changing the CCA level, to the terminal apparatus 2 that is connected to the base station apparatus 1. Furthermore, the base station apparatus 1 can transmit information indicating that the terminal apparatus 2 has to perform or stop the transmit power control, to the terminal apparatus 2 that is connected to the base station apparatus 1.

Based on the information for identifying the BSS, which is notified by the carrier sense unit 21002, the transmit power control unit 21003 can change the operation. It is considered that, in a case where a transmission source of the transmission frame that is received by the antenna unit 21006 is a terminal apparatus or a base station apparatus that belongs to a different BSS than the terminal apparatus 2-1, an influence of the terminal apparatus 2-1 on the terminal that is a destination of the transmission frame in question is small. For example, in a case where BSS identification information indicating the BSS that is different from the terminal apparatus 2-1 is acquired, the terminal apparatus 2-1 can make a determination not to perform the transmit power control, and can change a transmit power control method. For example, the terminal apparatus 2-1 can set a transmit power reduction ratio in the case where the BSS identification information indicating the BSS that is different from the terminal apparatus 2-1 is acquired, to be αOBSS and can set a transmit power reduction ratio in a case where BSS identification information indicating the BSS that is the same as the terminal apparatus 2-1 is acquired, to be αBSS. Furthermore, in the case where the BSS identification information indicating the BSS that is different from the terminal apparatus 2-1 is acquired and in the case where the BSS identification information indicating the BSS that is the same as the terminal apparatus 2-1 is acquired, the terminal apparatus 2-1 can use different tables.

As described above, the base station apparatus 1 and the terminal apparatus 2 apply the transmit power control, and thus the transmission opportunity reduction area 5 can be reduced. Because of this, it is possible that the capacity of the wireless communication system is increased.

[2. Second Embodiment not covered by the scope of claims.

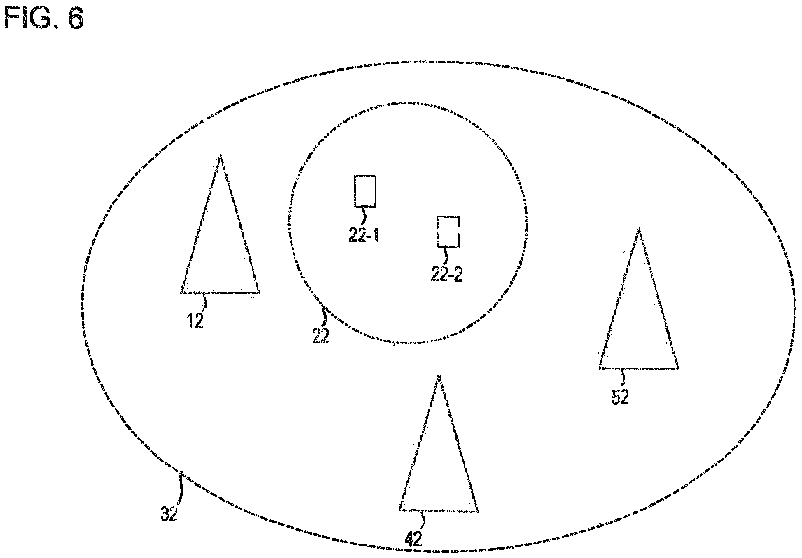

Fig. 6 is a schematic diagram illustrating an example of a management range 32 for the wireless communication system according to the second embodiment. The management range 32 includes a base station apparatus 12 and terminal apparatuses 22-1 to 22-2. Furthermore, a base station apparatus 42 and a base station apparatus 52 are in the management range 32, but may not be managed in the base station apparatus 12. The base station apparatuses 12, 42, and 52 can receive beacons of each other and can read pieces of information within the beacons. The terminal apparatuses 22-1 to 22-2 are also collectively called the terminal apparatus 22. Furthermore, the base station apparatuses 12, 42, and 52 are also called a base station apparatus 10.

The terminal apparatuses 22 can set different CCA levels, respectively. For example, the terminal apparatus 22-1 and the terminal apparatus 22-2 can set CL22-1 and CL22-2, as CCA levels, respectively. It is noted that in the following description, it is assumed that CL22-1 ≥ CL22-2. It is noted that the terminal apparatus 22 also can dynamically set CCA levels CL22-1 to CL22-2. For example, the terminal apparatus 22 can change the CCA levels CL22-1 and the CL22-2 according to the time, a frequency, a destination of the transmission frame, and a type of transmission frame.

The base station apparatus 10 can hold information relating to the type of the terminal apparatus that is connected to the base station apparatus 10. As the information relating to the type of the terminal apparatus, for example, the information relating to the CCA level of the terminal apparatus that is connected is held. It is noted that the terminal apparatus to be connected refers to a terminal apparatus that finishes suitable association processing between the base station apparatus and the terminal apparatus. The information relating to the type of the terminal apparatus, which is held by the base station apparatus 10, is also called terminal categorization information.

The terminal categorization information can include an average value of CCA level values of all the terminal apparatus that make connections to the base station apparatus 10. Furthermore, when it comes to the number of all the terminal apparatuses that make connections to the base station apparatus 10, the terminal categorization information can include information (hereinafter also called first new function usage information) relating to a ratio for the terminal apparatus that performs the CCA level changing. Furthermore, the terminal categorization information can include an average value of transmit power values of all the terminal apparatuses that make connections to the base station apparatus 10. Furthermore, when it comes to all the terminal apparatuses that make connections to the base station apparatus 10, the terminal categorization information can include information (hereinafter also called transmit power control usage information) relating to a ratio for the terminal apparatus that performs the transmit power control.

The base station apparatus 10 can transmit the terminal categorization information to be generated to the wireless section, in a state of being included in the transmission frame. For example, the base station apparatus 10 can broadcast the terminal categorization information using broadcast transmission of the beacon or the like.

The terminal apparatus 22 can transmit the information relating to the CCA level, which is held by the terminal apparatus 22, toward the base station apparatus 12. For example, the terminal apparatus 22 can include the information relating to the CCA level in the PHY header and the MAC header within the management frames, such as the probe request, the authentication request, and the connection request, or within the transmission frame.

Furthermore, the terminal apparatus 22 can receive the transmission frame that includes the terminal categorization information which is transmitted by the base station apparatus 10.

With the operation described above, the base station apparatus 10 and the terminal apparatus 22 can acquire the terminal categorization information within the management range 32.

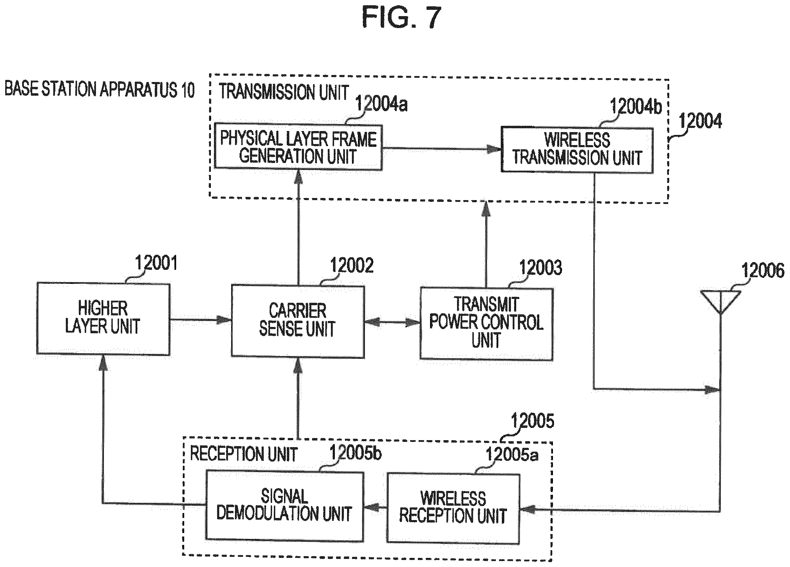

Fig. 7 is a schematic diagram illustrating an example of an apparatus constitution of the base station apparatus 10 according to the second embodiment. The base station apparatus 10 is constituted to include a higher layer unit 12001, a carrier sense unit 12002, a transmit power control unit 12003, a transmission unit 12004, a reception unit 12005, and an antenna unit 12006.

Because the higher layer unit 12001 performs the same operation as the higher layer unit 11001 according to the first embodiment, a description thereof is omitted.

The carrier sense unit 12002 has a function of making a determination of whether or not the transmission is possible based on the carrier sense. The carrier sense unit 12002 can notify the transmit power control unit 12003 of the information relating to the CCA level, which is used for the carrier sense. Furthermore, the carrier sense unit 12002 can acquire the terminal categorization information that is transmitted by a base station apparatus other than the base station apparatus 10. It is noted that the base station apparatus 10 will be described below as being the first new function usage information, but the terminal categorization information according to the present invention is not limited to the first new function usage information. The base station apparatus 10 can acquire pieces of first new function usage information that are generated by one or several of or all of the base station apparatuses 10, which include the base station apparatus 10 in question. For example, the base station apparatus 12 can acquire the first new function usage information that is generated by the base station apparatus 12 in question, and the first new function usage information that is generated by a base station apparatus other than the base station apparatus 12 in question.

The carrier sense unit 12002 can generate second new function usage information using the first new function usage information. For example, the carrier sense unit 12002 can generate the second new function usage information by adding up all the acquired pieces of first new function usage information and performing an averaging operation. The second new function usage information is information relating to an area that is wider than an area corresponding to the first new function usage information.

The carrier sense unit 12002 can notify the transmit power control unit 12003 of the first new function usage information or the second new function usage information. The carrier sense unit 12002 can notify the transmit power control unit 12003 of the information for identifying the transmission source of the transmission frame that is transmitted by the antenna unit 12006.

Based on the first new function usage information, the second new function usage information, or the information relating to the CCA level, the transmit power control unit 12003 performs the transmit power control. Operation of the transmit power control unit 12003 will be described below.

The transmission unit 12004 includes a physical layer frame generation unit 12004a and a wireless transmission unit 12004b.

Because the physical layer frame generation unit 12004a performs the same operation as the physical layer frame generation unit 11004a according to the first embodiment, a description thereof is omitted.

Because the wireless transmission unit 12004b performs the same operation as the physical layer frame generation unit 11004b according to the first embodiment, a description thereof is omitted.

The reception unit 12005 is constituted to include a wireless reception unit 12005 and a signal demodulation unit 12005b. Because the reception unit 12005 performs the same operation as the reception unit 11005 according to the first embodiment, a description thereof is omitted.

Because the wireless reception unit 12005a performs the same operation as the wireless reception unit 11005a according to the first embodiment, a description thereof is omitted.

Because the signal demodulation unit 12005b performs the same operation as the wireless reception unit 11005b according to the first embodiment, a description thereof is omitted.

Because the antenna unit 12006 performs the same operation as the antenna unit 11006 according to the first embodiment, a description thereof is omitted.

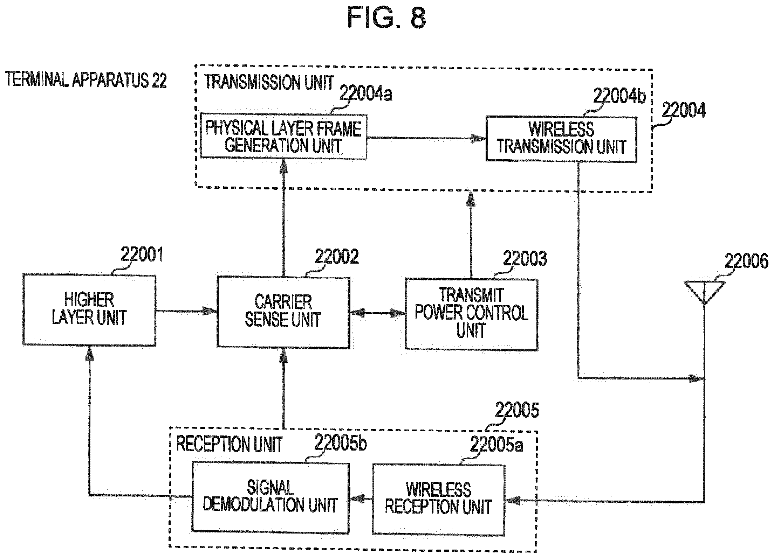

Fig. 8 is a diagram illustrating an example of an apparatus constitution of the terminal apparatus 22 according to the present embodiment. The terminal apparatus 22 is constituted to include a higher layer unit 22001, a carrier sense unit 22002, a transmit power control unit 22003, a transmission unit 22004, a reception unit 22005, and an antenna unit 22006.

Because the higher layer unit 22001 performs the same operation as the higher layer unit 21001 according to the first embodiment, a description thereof is omitted.

The carrier sense unit 22002 has a function of making a determination of whether or not the transmission is possible based on the carrier sense. The carrier sense unit 22002 can notify the transmit power control unit 22003 of the information relating to the CCA level that is used for the carrier sense. Furthermore, the carrier sense unit 22002 can acquire the terminal categorization information that is transmitted by the base station apparatus 10.

The carrier sense unit 22002 can notify the transmit power control unit 22003 of the first new function usage information or the second new function usage information.

Based on the first new function usage information, the second new function usage information, or the information relating to the CCA level, the transmit power control unit 22003 performs the transmit power control. Operation of the transmit power control unit 22003 will be described below.

The transmission unit 22004 includes a physical layer frame generation unit 22004a and a wireless transmission unit 22004b.

Because the physical layer frame generation unit 22004a performs the same operation as the physical layer frame generation unit 21004a according to the first embodiment, a description thereof is omitted.

Because the wireless transmission unit 22004b performs the same operation as the physical layer frame generation unit 21004b according to the first embodiment, a description thereof is omitted.

The reception unit 22005 is constituted to include a wireless reception unit 22005 and a signal demodulation unit 22005b.

Because the wireless reception unit 22005a performs the same operation as the wireless reception unit 21005a according to the first embodiment, a description thereof is omitted.

Because the signal demodulation unit 22005b performs the same operation as the wireless reception unit 21005b according to the first embodiment, a description thereof is omitted.

Because the antenna unit 22006 performs the same operation as the antenna unit 21006 according to the first embodiment, a description thereof is omitted.

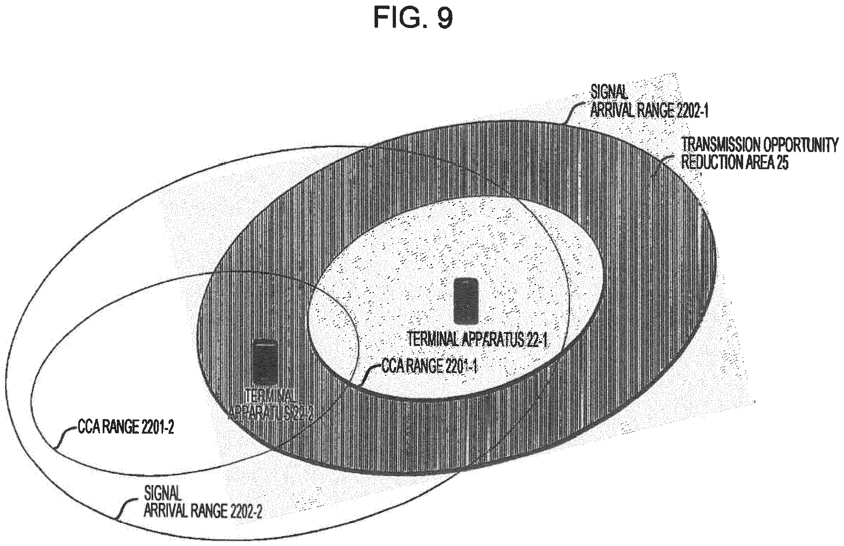

Fig. 9 is a diagram illustrating an example of the carrier sense operation by the terminal apparatus 22. The terminal apparatus 22-1 forms a CCA range 2201-1 and a signal arrival range 2202-1. The CCA range 2201-1 indicates a range in which the terminal apparatus 22-1 performs the transmission standby using the carrier sense. The signal arrival range 2202-1 indicates a range in which a signal that is transmitted by the terminal apparatus 22-1 arrives. Furthermore, the terminal apparatus 22-2 forms a CCA range 2201-2 and a signal arrival range 2202-2. The CCA range 2201-2 indicates a range in which the terminal apparatus 22-2 performs the transmission standby using the carrier sense. The signal arrival range 2202-2 indicates a range in which a signal that is transmitted by the terminal apparatus 22-2 arrives.

It is noted that the CCA level of the terminal apparatus 22 is assumed to be CL22-1 $\geq$ CL22-2 and that the CCA range 2201-1 is narrower than or equal to CCA 2201-2.

An example that is illustrated in Fig. 9 is an example of the carrier sense in a case where it is assumed that CL22-1 = CL22-2. In this case, the CCA range 2201-1 and the CCA range 2201-2 are equal in size to each other. In the example that is illustrated in Fig. 9, in a case where the terminal apparatus 22-1 transmits a signal, the terminal apparatus 22-2 can transmit a signal, and in a case where the terminal apparatus 22-2 transmits a signal, the terminal apparatus 22-1 can transmit a signal. The terminal apparatus 22-2 is positioned outside of the CCA range 2201-1, and is positioned in an area (a transmission opportunity reduction area 25) that is positioned within the signal arrival range 2202-1, but the terminal apparatus 22-2 is positioned outside of an area in the signal arrival range 2202-1. Because of this, the transmission opportunity is reduced by the terminal apparatus 22-1. More precisely, the terminal apparatuses 22 that have the same CCA level or approximately the same CCA level are not influenced by the transmission opportunity reduction area 25, and none of the transmission opportunities for the terminal apparatuses 22 are not reduced.

For example, the terminal apparatus 22 in the vicinity of the terminal apparatus 22-1 performs the carrier sense using a value that is close to or the same as the CCA level CL22-1 of the terminal apparatus 22-1 in question, it is assumed that the reduction of the transmission opportunity reduction area 25 that results from the terminal apparatus 22-1 performing the transmit power control brings about a small effect. Furthermore, with the transmit power control, the terminal apparatus 22-1 lowers transmit power of the terminal apparatus 22-1 in question, and thus the signal arrival range 2202-1 for the terminal apparatus 22-1 is reduced. Accordingly, based on the first new function usage information or the second new function usage information, the terminal apparatus 22-1 suitably performs the transmit power control.

Based on the information relating to the CCA level, the first new function usage information, or the second new function usage information, the transmit power control unit 22003 can perform the transmit power control. The transmit power control unit 22003 will be described below as using a value $\gamma$ of the first new function usage information, but although a value $\gamma$ of the second new function usage information is used, it is possible that the present invention is implemented.

A first method according to the second embodiment is a method in which the transmit power reduction ratio $\alpha$ that is generated based on the information relating to the CCA level is changed based on $\gamma$. It is noted that $\gamma$ will be set to be $0 \leq \gamma \leq 1$, but the method according to the present invention is not limited to a range of $\gamma$. Furthermore, the description is provided to show that the greater a value of $\gamma$, the greater a ratio for the legacy terminal apparatus. However, a method of calculating $\gamma$ is not limited, and a setting can be provided to show that the greater a value of $\gamma$, the greater a ratio of the legacy terminal apparatus.

For example, in a case where $\gamma > 0.5$ (for example, in a case where the number of legacy terminals is greater than the number of new function-equipped terminals) the transmit power control unit 22003 can change the transmit power in such a manner that the transmit power increases by $\alpha$ times as much. For example, in a case where $\gamma \leq 0.5$ (for example, in a case where the number of legacy terminals is smaller than the number of new function-equipped terminals) the transmit power control unit 22003 may not change the transmit power. A threshold of $\gamma$ for the transmit power control unit 22003 to multiply the transmit power by $\alpha$ times can be determined independently by the transmit power control unit 22003.

For example, the transmit power control unit 22003 can change the transmit power based on $\alpha2$ that results from calculation using the equation $\alpha2 = \beta2 \times \alpha \times \gamma$. For example, the carrier sense unit 22002 notifies the transmit power control unit 22003 of the information relating to whether or not the CCA level is changed, as the information relating to the CCA level. Based on the information relating to whether or not the CCA level is changed, the transmit power control unit 22003 performs the transmit power control. For example, in a case where the carrier sense unit 22002 performs the CCA level change, the transmit power control unit 22003 can multiply the transmit power by $\alpha2$ times using a transmit power reduction ratio $\alpha2$.

It is noted that a method of calculating $\alpha 2$ in the first method according to the second embodiment is not limited to the one described above. In a case where $\gamma$ is great, because the reduction of the transmission opportunity for the legacy terminal apparatus discontinues gradually, the terminal apparatus 22-1 suitably uses a rule for determining $\alpha 2$ in a manner that reduces the transmit power.

A second method according to the second embodiment is a method of changing Coff in Equation (1). For example, setting to Coff2 = Coff $\times$ $\gamma$ takes place and the transmit power control unit 22003 can determine the transmit power using Equation (2).

$$P = P0 \times \beta/Coff2 \quad (2)$$

It is noted that the second method according to the second embodiment is not limited to the method described above. In the case where $\gamma$ is great, a rule for configuring a value Coff2 is suitably used in such a manner that the transmission opportunity reduction area is suitably reduced.

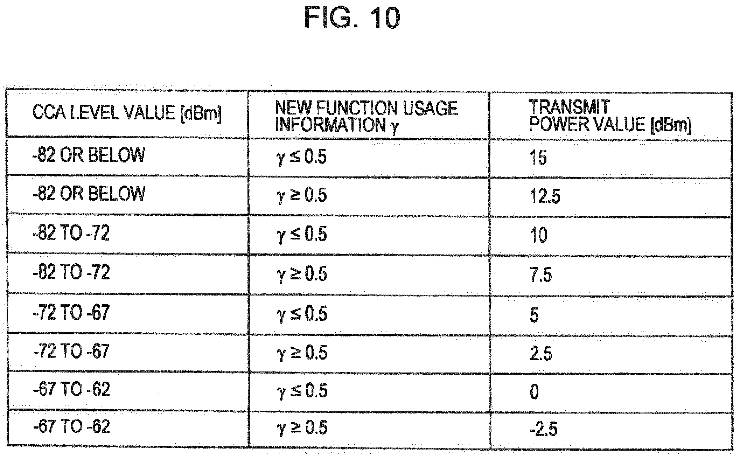

A third method according to the second embodiment is a method in which the transmit power control unit 22003 refers to a table showing a relationship between the CCA level value, $\gamma$, and the transmit power value. Fig. 10 is a diagram illustrating an example of a table showing a relationship between the CCA level value, $\gamma$, and the transmit power value. The transmit power control unit 22003 can acquire the transmit power value that corresponds to the acquired CCA level value, from the table that is illustrated in FIG. 10.

It is noted that in the first to third methods according to the second embodiment, the CCA level value, the CCA offset value, and the transmit power value can also be set to be in decibel notation and can also be set to be in a true value expression.

Furthermore, in the first to third methods according to the second embodiment, the terminal apparatus 22-1 can also calculate the transmit power based on only $\gamma$, without depending on the CCA level value.

It is noted that the transmit power control unit 22003 can change the operation, based on the information for identifying the BSS, which is notified by the carrier sense unit 22002. It is considered that, in a case where a transmission source of the transmission frame that is received by the antenna unit 22006 is a terminal apparatus or a base station apparatus that belongs to a different BSS than the terminal apparatus 22-1, an influence of the terminal apparatus 22-1 on the terminal that is a destination of the transmission frame in question is small. For example, in a case where BSS identification information indicating the BSS that is different from the terminal apparatus 22-1 is acquired, the terminal apparatus 22-1 can make a determination not to perform the transmit power control, and can change a transmit power control method. For example, the terminal apparatus 22-1 can set a transmit power reduction ratio in the case where the BSS identification information indicating the BSS that is different from the terminal apparatus 22-1 is acquired, to be $\alpha$OBSS and can set a transmit power reduction ratio in a case where BSS identification information indicating the BSS that is the same as the terminal apparatus 22-1 is acquired, to be $\alpha$BSS. Furthermore, in the case where the BSS identification information indicating the BSS that is different from the terminal apparatus 22-1 is acquired and in the case where the BSS identification information indicating the BSS that is the same as the terminal apparatus 22-1 is acquired, the terminal apparatus 22-1 can use different tables.

As described above, the base station apparatus 10 and the terminal apparatus 22 apply the transmit power control, and thus the transmission opportunity reduction area 25 can be reduced. Because of this, it is possible that the capacity of the wireless communication system is increased.

[3. Points in Common to All Embodiments]

A program running on the base station apparatus 1, the base station apparatus 10, the terminal apparatus 2, and the terminal apparatus 22 according to the present invention is a program (a program that causes a computer to operate) that controls a CPU and the like in such a manner as to realize the functions according to the embodiments of the present invention, which are described above. Then, pieces of information that are handled in these apparatus are temporarily accumulated in a RAM while being processed. Thereafter, the pieces of information are stored in various ROMs or HDDs, and if need arises, is read by the CPU to be modified or written. Of a semiconductor medium (for example, a ROM, a nonvolatile memory card, or the like), an optical storage medium (for example, a DVD, a MO, a MD, a CD, a BD, or the like), a magnetic recording medium (for example, a magnetic tape, a flexible disk, or the like), and the like, any one may be possible as a recording medium on which to store the program. Furthermore, in some cases, not only are the functions according to the embodiments, which are described above, realized by executing the loaded program, but the functions according to the present invention are realized by performing processing in conjunction with an operating system, other application programs, or the like, based on an instruction from the program.

Furthermore, in a case where the programs are distributed on the market, the programs, each of which is stored on a portable recording medium, can be distributed, or can be transferred to a server computer that is connected through a network such as the Internet. In this case, a storage device of the server computer also falls within the scope of the present invention. Furthermore, one or several portions of or all portions of each of the base station apparatus 1, the base station apparatus 10, the terminal apparatus 2, and the terminal apparatus 22 according to the embodiments described above may be realized as an LSI that is a typical integrated circuit. A functional block of each of the base station apparatus 1, the base station apparatus 10, the terminal apparatus 2, and the terminal apparatus 22 may be individually realized into a chip, and one or several of, or all of the functional blocks may be integrated into a chip. In a case where the functional block is integrated into a circuit, an integrated circuit control unit is added that controls the functional blocks.

Furthermore, a technique for the integrated circuit is not limited to the LSI, and an integrated circuit for the functional block may be realized as a dedicated circuit or a general-purpose processor. Furthermore, if, with advances in semiconductor technology, a circuit integration technology for a circuit with which an LSI is replaced will appear, it is also possible that an integrated circuit to which such a technology applies is used.

It is noted that the invention in the present application is not limited to the embodiments described above. Furthermore, application of the base station apparatus 1, the base station apparatus 10, the terminal apparatus 2, and the terminal apparatus 22 according to the invention in the present application is not limited to a mobile station apparatus. It goes without saying that the terminal apparatus can find application in a stationary-type electronic apparatus that is installed indoors or outdoors, or a non-movable-type electronic apparatus, for example, an AV apparatus, a kitchen apparatus, a cleaning or washing machine, an air conditioner, office equipment, a vending machine, and other household apparatuses.

The embodiments of the present invention are described in detail above with reference to the drawings, but specific configurations are not limited to the embodiments. A design and the like within the scope not departing from the gist of the present invention also fall within the scope of the claims.

Industrial Applicability

The present invention is suitably used for a terminal apparatus, a base station apparatus, a communication method, and a communication system.

It is noted that, the present international application claims the benefits of Japanese Patent Application No. 2015-036028 filed on February 26, 2015, and the entire contents of Japanese Patent Application No. 2015-036028 are incorporated herein by reference.

Reference Signs List

1, 10, 12, 42, 52 BASE STATION APPARATUS
2, 2-1, 2-2, 22, 22-1, 22-2 TERMINAL APPARATUS
3, 32 MANAGEMENT RANGE

5, 25 TRANSMISSION OPPORTUNITY REDUCTION AREA
201-1, 201-2, 2201-1, 2201-2 CCA RANGE
202-1, 202-2, 2202-1, 2202-2 SIGNAL ARRIVAL RANGE
11001, 21001, 12001, 22001 HIGHER LAYER UNIT
11002, 21002, 12002, 22002 CARRIER SENSE UNIT
11003, 21003, 12003, 22003 TRANSMIT POWER CONTROL UNIT
11004, 21004, 12004, 22004 TRANSMISSION UNIT
11004a, 21004a, 12004a, 22004a PHYSICAL LAYER FRAME GENERATION UNIT
11004b, 21004b, 12004b, 22004b WIRELESS TRANSMISSION UNIT
11005, 21005, 12005, 22005 RECEPTION UNIT
11005a, 21005a, 12005a, 22005a WIRELESS RECEPTION UNIT
11005b, 21005b, 12005b, 22005b SIGNAL DEMODULATION UNIT
11006, 21006, 12006, 22006 ANTENNA UNIT

**Claims**

1. A terminal apparatus (2), comprising:

   a carrier sense unit (21002) equipped with a function of performing carrier sense for checking a situation of a channel using a threshold of carrier sense, and a function of changing the threshold of carrier sense from a predetermined value of a threshold of the carrier sense,
   a reception unit (21005) equipped with a function of receiving a frame from another terminal apparatus, wherein the frame comprises at least information relating to how a transmit power can be changed from a predetermined transmit power value,
   a transmit power control unit (21003) equipped with a function of changing the transmit power from the predetermined transmit power value based on at least the information included in the frame when the threshold of carrier sense is changed from the predetermined value of the threshold of the carrier sense, and setting the transmit power to the predetermined transmit power value when the threshold of carrier sense is identical to the predetermined value of the threshold of the carrier sense, and
   a transmission unit (21004) equipped with a function of transmitting a transmit frame based on the transmit power determined by the transmit power control unit (21003).

2. A communication method for use in a terminal apparatus (2), the method comprising:

a step of performing carrier sense for checking a situation of a channel using a threshold of carrier sense;

a step of changing the threshold of carrier sense from a predetermined value of a threshold of the carrier sense;

a step of receiving a frame from another terminal apparatus, wherein the frame comprises at least information relating to how a transmit power can be changed from a predetermined transmit power value;

a step of changing the transmit power from the predetermined transmit power value based on at least the information included in the frame when the threshold of carrier sense is changed from the predetermined value of the threshold of the carrier sense;

a step of setting the transmit power to the predetermined transmit power value when the threshold of carrier sense is identical to the predetermined value of the threshold of the carrier sense; and

a step of transmitting a transmit frame based on the transmit power determined by the steps of changing and setting the transmit power.

## Patentansprüche

1. Ein Endgerät (2), das Folgendes umfasst:

eine Trägererfassungseinheit (21002), die ausgestattet ist mit einer Funktion zum Durchführen einer Trägererfassung zum Prüfen einer Situation eines Kanals unter Verwendung eines Schwellenwerts der Trägererfassung, und mit einer Funktion zum Ändern des Schwellenwerts der Trägererfassung von einem vorbestimmten Wert eines Schwellenwerts der Trägererfassung.

eine Empfangseinheit (21005), die ausgestattet ist mit einer Funktion zum Empfangen eines Frame von einem anderen Endgerät, wobei der Frame zumindest Informationen umfasst, die sich darauf beziehen, wie eine Sendeleistung von einem vorbestimmten Sendeleistungswert geändert werden kann,

eine Sendeleistungs-Steuereinheit (21003), die ausgestattet ist mit einer Funktion zum Ändern der Sendeleistung von dem vorbestimmten Sendeleistungswert auf der Grundlage von zumindest der im Frame enthaltenen Informationen, wenn der Schwellenwert der Trägererfassung von dem vorbestimmten Wert des Schwellenwerts der Trägererfassung geändert wird, und zum Einstellen der Sendeleistung auf den vorbestimmten Sendeleistungswert, wenn der Schwellenwert der Trägererfassung identisch ist mit dem vorbestimmten Wert des Schwellenwerts der Trägererfassung, und

eine Sendeeinheit (21004), die ausgestattet ist mit einer Funktion zum Senden eines Sende-Frame basierend auf der durch die Sendeleistungs-Steuereinheit (21003) bestimmten Sendeleistung.

2. Ein Kommunikationsverfahren zur Verwendung in einem Endgerät (2), wobei das Verfahren Folgendes umfasst:

einen Schritt des Durchführens einer Trägererfassung zum Prüfen einer Situation eines Kanals unter Verwendung eines Schwellenwerts der Trägererfassung;

einen Schritt des Änderns des Schwellenwerts der Trägererfassung von einem vorbestimmten Wert eines Schwellenwerts der Trägererfassung;

einen Schritt des Empfangens eines Frame von einem anderen Endgerät, wobei der Frame zumindest Informationen umfasst, die sich darauf beziehen, wie eine Sendeleistung von einem vorbestimmten Sendeleistungswert geändert werden kann;

einen Schritt des Änderns der Sendeleistung von dem vorbestimmten Sendeleistungswert auf der Grundlage von zumindest der im Frame enthaltenen Informationen, wenn der Schwellenwert der Trägererfassung von dem vorbestimmten Wert des Schwellenwerts der Trägererfassung geändert wird;

einen Schritt des Einstellens der Sendeleistung auf den vorbestimmten Sendeleistungswert, wenn der Schwellenwert der Trägererfassung identisch mit dem vorbestimmten Wert des Schwellenwerts der Trägererfassung ist; und

einen Schritt des Sendens eines Sende-Frame auf der Grundlage der durch die Schritte des Änderns und Einstellens der Sendeleistung bestimmten Sendeleistung.

## Revendications

1. Appareil de terminal (2) comprenant :

un module de détection de porteuse (21002) équipé d'une fonction de réalisation de détection de porteuse pour vérifier une situation d'un canal utilisant un seuil de détection de porteuse, et une fonction de changement du seuil de détection de porteuse depuis une valeur prédéterminée d'un seuil de la détection de porteuse,

un module de réception (21005) équipé d'une fonction de réception d'une trame d'un autre appareil de terminal, dans lequel la trame comprend au moins des informations concernant la manière dont une puissance de transmission peut être changée depuis une valeur de puissance de transmission prédéterminée,

un module de commande de puissance de transmission (21003) équipé d'une fonction de changement de la puissance de transmission depuis la valeur de puissance de transmission prédéterminée en fonction au moins des informations incluses dans la trame lorsque le seuil de détection de porteuse est changé depuis la valeur prédéterminée du seuil de la détection de porteuse, et de réglage de la puissance de transmission sur la valeur de puissance de transmission prédéterminée lorsque le seuil de détection de porteuse est identique à la valeur prédéterminée du seuil de la détection de porteuse, et

un module de transmission (21004) équipé d'une fonction de transmission d'une trame de transmission en fonction de la puissance de transmission déterminée par le module de commande de puissance de transmission (21003).

2.  Procédé de communication destiné à être utilisé dans un appareil de terminal (2), le procédé comprenant :

une étape consistant à réaliser une détection de porteuse pour vérifier une situation d'un canal utilisant un seuil de détection de porteuse ; une étape consistant à changer le seuil de détection de porteuse depuis une valeur prédéterminée d'un seuil de la détection de porteuse ; une étape consistant à recevoir une trame d'un autre appareil de terminal, dans lequel la trame comprend au moins des informations concernant la manière dont une puissance de transmission peut être changée depuis une valeur de puissance de transmission prédéterminée ; une étape consistant à changer la puissance de transmission depuis la valeur de puissance de transmission prédéterminée en fonction au moins des informations incluses dans la trame lorsque le seuil de détection de porteuse est changé depuis la valeur prédéterminée du seuil de la détection de porteuse ; une étape consistant à régler la puissance de transmission sur la valeur de puissance de transmission prédéterminée lorsque le seuil de détection de porteuse est identique à la valeur prédéterminée du seuil de la détection de porteuse ; et une étape consistant à transmettre une trame de transmission en fonction de la puissance de transmission déterminée par les étapes de changement et de réglage de la puissance de transmission.

**FIG. 1**

## FIG. 2

BASE STATION APPARATUS 1

TRANSMISSION UNIT

PHYSICAL LAYER FRAME GENERATION UNIT (11004a)

WIRELESS TRANSMISSION UNIT (11004b)

11004

HIGHER LAYER UNIT (11001)

CARRIER SENSE UNIT (11002)

TRANSMIT POWER CONTROL UNIT (11003)

11006

RECEPTION UNIT (11005)

SIGNAL DEMODULATION UNIT (11005b)

WIRELESS RECEPTION UNIT (11005a)

EP 3 694 288 B1

# FIG. 3

FIG. 4

SIGNAL ARRIVAL RANGE 202-1

TRANSMISSION OPPORTUNITY REDUCTION AREA 5

TERMINAL APPARATUS 2-1

CCA RANGE 201-1

TERMINAL APPARATUS 2-2

SIGNAL ARRIVAL RANGE 202-2

CCA RANGE 201-2

# FIG. 5

| CCA LEVEL VALUE [dBm] | TRANSMIT POWER VALUE [dBm] |
| --- | --- |
| -82 OR BELOW | 15 |
| -82 TO -72 | 10 |
| -72 TO -67 | 5 |
| -67 TO -62 | 0 |

FIG. 6

22-1

22-2

22

52

42

12

32

# FIG. 7

BASE STATION APPARATUS 10

TRANSMISSION UNIT 12004a

PHYSICAL LAYER FRAME GENERATION UNIT

WIRELESS TRANSMISSION UNIT 12004b

12004

12001 HIGHER LAYER UNIT

12002 CARRIER SENSE UNIT

12003 TRANSMIT POWER CONTROL UNIT

12006

12005 RECEPTION UNIT 12005b

SIGNAL DEMODULATION UNIT

WIRELESS RECEPTION UNIT 12005a

## FIG. 8

TERMINAL APPARATUS 22

TRANSMISSION UNIT 22004a

PHYSICAL LAYER FRAME GENERATION UNIT

22004b

WIRELESS TRANSMISSION UNIT

22004

22001

HIGHER LAYER UNIT

22002

CARRIER SENSE UNIT

22003

TRANSMIT POWER CONTROL UNIT

22006

RECEPTION UNIT 22005b

SIGNAL DEMODULATION UNIT

22005a

WIRELESS RECEPTION UNIT

22005

EP 3 694 288 B1

# FIG. 9

SIGNAL ARRIVAL RANGE 2202-1

TRANSMISSION OPPORTUNITY REDUCTION AREA 25

TERMINAL APPARATUS 22-1

CCA RANGE 2201-1

TERMINAL APPARATUS 22-2

CCA RANGE 2201-2

SIGNAL ARRIVAL RANGE 2202-2

EP 3 694 288 B1

# FIG. 10

| CCA LEVEL VALUE [dBm] | NEW FUNCTION USAGE INFORMATION $\gamma$ | TRANSMIT POWER VALUE [dBm] |
| --- | --- | --- |
| -82 OR BELOW | $\gamma \leq 0.5$ | 15 |
| -82 OR BELOW | $\gamma \geq 0.5$ | 12.5 |
| -82 TO -72 | $\gamma \leq 0.5$ | 10 |
| -82 TO -72 | $\gamma \geq 0.5$ | 7.5 |
| -72 TO -67 | $\gamma \leq 0.5$ | 5 |
| -72 TO -67 | $\gamma \geq 0.5$ | 2.5 |
| -67 TO -62 | $\gamma \leq 0.5$ | 0 |
| -67 TO -62 | $\gamma \geq 0.5$ | -2.5 |

EP 3 694 288 B1

**REFERENCES CITED IN THE DESCRIPTION**

**Patent documents cited in the description**

- WO 2014071308 A1
- US 2008125160 A
- JP 2015036028 A